(19) Europäisches Patentamt
European Patent Office
Office européen des brevets

(11) EP 4 705 526 B1

(12) **EUROPEAN PATENT SPECIFICATION**

(45) Date of publication and mention of the grant of the patent:
**27.05.2026 Bulletin 2026/22**

(21) Application number: **25735910.9**

(22) Date of filing: **24.06.2025**

(51) International Patent Classification (IPC):
***C14C 3/22*** $^{(2006.01)}$ ***C08F 222/38*** $^{(2006.01)}$
***C08L 33/26*** $^{(2006.01)}$

(52) Cooperative Patent Classification (CPC):
(C-Sets available)
**C14C 3/22** (Cont.)

(86) International application number:
**PCT/EP2025/067788**

(87) International publication number:
**WO 2026/017372 (22.01.2026 Gazette 2026/04)**

(54) **POLYMER TANNING AGENT**

POLYMER-GERBSTOFF

AGENT DE TANNAGE POLYMÈRE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **19.07.2024 FR 2407947**

(43) Date of publication of application:
**11.03.2026 Bulletin 2026/11**

(73) Proprietor: **SNF Group**
**42160 Andrézieux-Bouthéon (FR)**

(72) Inventors:
- **CHEUCLE, Pierrick**
  **42160 ANDREZIEUX-BOUTHEON (FR)**
- **MOREIRA, Guillaume**
  **42160 ANDREZIEUX-BOUTHEON (FR)**
- **KIEFFER, Johann**
  **42160 ANDREZIEUX-BOUTHEON (FR)**
- **BRUN, Gauthier**
  **42160 ANDREZIEUX-BOUTHEON (FR)**

(74) Representative: **Ipsilon**
**Le Contemporain**
**50 Chemin de la Bruyère**
**69574 Dardilly Cedex (FR)**

(56) References cited:
**EP-A1- 0 118 213** **EP-A2- 0 132 630**
**CN-A- 109 354 644**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 220/06, C08F 220/58**

## Description

### Technical field of the invention

The present invention relates to a tanning agent and a method for tanning leather using said agent, as well as the leather obtained as a result of this method and its use for manufacturing items.

### Prior art

Leather tanning consists of transforming putrescible skins or furs into durable leather. To do this, the collagen of the skins is chemically modified, such that the leather resulting from the tanning is resistant to heat and to microorganisms, while preserving its flexibility and a pleasant feeling to the touch.

There are three main tanning methods: mineral tanning, in particular chromium tanning, vegetable tanning, for example with tara, mimosa, or chestnut, and synthetic tanning, in particular using glutaraldehyde.

Chromium tanning is the most efficient and versatile method to date. Chromium gives the skin excellent physical properties, while offering a rapid and inexpensive method. Other mineral tanning agents, aluminium- or zirconium-based, are also used but remain less efficient.

However, the use of heavy metals, like chromium, presents significant problems at the human and environmental level, due to the high toxicity of these metals. Indeed, chromium can cause allergic reactions when it comes into contact with the skin. Furthermore, it is extremely polluting and is found in high concentration in the wastewater of tanneries because its absorption rate by treated skin is only around 70%. This results in a significant waste of resources, high wastewater treatment costs, and significant environmental pollution.

Vegetable tanning uses tannins, which are extracted from plants. However, it requires long and elaborate tanning processes, which explains why vegetable tanning has largely been replaced by chromium tanning which is economically much more profitable.

Another tanning method is synthetic glutaraldehyde tanning, in which the bifunctionality of glutaraldehyde serves to crosslink the peptide fibres of the skin. Thanks to its two aldehyde functions, glutaraldehyde reacts with two different fibres and binds them permanently via the formation of two covalent bonds.

The main disadvantages of this method are related to the toxicology of glutaraldehyde, in particular its toxicity to the environment. In addition, due to its respiratory toxicity and its mutagenicity, glutaraldehyde is classified as a substance of remarkably high concern (SVHC) under the REACH regulation.

The use of technologies based on aldehyde-based functionalisation also has the disadvantage of releasing formaldehyde, which is a carcinogen, into the environment.

For decades, the partial or total substitution of chromium constitutes a major interest for manufacturers.

In this context, the use of polymers as tanning agents has formed the subject of in-depth studies. The use of polyacrylic or polymethacrylic acid is documented in numerous patents (FR 1 415 763, FR 1 549 717, DE 1 930 225, DE 2 755 087, US 3 997 486, EP 118 213) but most often leads to denaturation of leather (Article JSLTC, July-August 1995 volume 79, "A study of pig hide tanned with polymethacrylic acid"). Many acrylic polymers are also described in literature with varied chemistries. Non-exhaustively, it is possible to mention $\alpha$-hydroxylated acrylic acid polymers (US 5,725,599), acrylic acid-ethyl acrylate or hydroxyethyl acrylate polymers terminated with sulphur groups (US 4,961,750), acrylamide-ATBS-VPA polymers (US 4,518,745; ATBS = 2-acrylamido-2-methylpropanesulfonic acid; VPA = vinylphosphonic acid), acrylic acid-tert-butylmethacrylate-2-EHA polymers (US 2010/62490). However, these compounds have limited effectiveness. EP 0 132 630 discloses polymers of a monomer phosphonic acid while CN 109 354 644 discloses a polymer of acrylic acid, acrylamide and maleic anhydride.

The Applicant has discovered that the use of a tanning agent having a specific composition made it possible to meet the needs of manufacturers by offering a novel solution, making it possible to substitute at least partially the chromium-based tanning agent (or even to remove it), while offering a tanning agent having the effectiveness of a glutaraldehyde-based agent, but not being harmful to humans or the environment.

The present invention falls under a principle of awareness of the impact of industrial activity on the environment. Thanks to the tanning agent of the invention, it is possible to replace toxic compounds during a tanning method, thus reducing the environmental impact of the leather industry. Furthermore, the invention makes it possible to optimise the treatment of wastewater coming from tanning insofar as it makes it possible to substitute, or even replace, chromium-based agents. This results in an energy saving from tanning as a whole.

### Summary of the invention

The invention relates to a tanning agent consisting of a polymer of at least:

- 0.01 to 12 mol% of N-methylol(meth)acrylamide; and
- 50 to 99.99 mol% of at least one anionic hydrophilic monomer.

The invention also relates to a method for preparing a tanning agent consisting of a polymer of at least:

- 0.01 to 12 mol% of N-methylol(meth)acrylamide monomer; and
- 50 to 99.99 mol% of at least one anionic hydrophilic monomer,

this method comprising at least the following successive steps:

i) mixing the monomers with at least one polymerisation initiator in a polar solvent;
ii) radical polymerisation of the monomers to obtain the tanning agent.

The invention also relates to a method for tanning leather using said tanning agent.
The invention also relates to leather obtained according to the tanning method of the invention.
Finally, the invention relates to a method for manufacturing items for leather goods, gloves, shoemaking, furniture, or saddlery with the leather obtained according to the tanning method of the invention.

**Description of the invention**

"Tanning agent" means a polymer of at least two different monomers (N-methylol(meth)acrylamide + anionic hydrophilic monomer). Preferably, the tanning agent according to the invention is water-soluble.
"Hydrophilic monomer" means a monomer which has an octanol/water partition coefficient, log($K_{ow}$), of less than or equal to 0.
"Hydrophobic monomer" means a monomer which has an octanol/water partition coefficient, log($K_{ow}$), greater than 0.
The octanol-water partition coefficient, $K_{ow}$, represents the ratio of concentrations (g/L) of a monomer between the octanol phase and the aqueous phase. It is determined at 25°C in an octanol/water mixture having a volume ratio of 1/1, at a pH of between 6 and 8. It is defined as follows:

$$K_{ow} = \frac{[monomer]octanol}{[monomer]water}$$

"Water-soluble polymer" means a polymer which gives an aqueous solution without insoluble particles when it is dissolved under stirring at 25°C and with a concentration of 10 $g.L^{-1}$ in deionised water.
"X and/or Y" means, according to the invention, "X", or "Y", or "X and Y".
All possible combinations between the different embodiments disclosed also form part of the invention, whether they are preferred embodiments or given as an example. Furthermore, when ranges of values are indicated, the limit values form part of these ranges. The disclosure also includes all of the combinations between the limit values of these ranges of values. For example, the ranges of values "1-20, preferably 5-15" imply disclosure of the ranges "1-5", "1-15", "5-20" and "15-20" and the values 1, 5, 15 and 20.
All of the particular and/or preferred embodiments described in the invention can be combined, on the condition that they are not incompatible.

**Tanning agent**

The tanning agent is made of a polymer of at least:

- 0.01 to 12 mol% of N-methylol(meth)acrylamide; and
- 50 to 99.99 mol% of at least one anionic hydrophilic monomer.

The molar percentages are expressed with respect to the total amount of monomers, except for possible branching or structuring agents.
In a preferred embodiment, the N-methylol(meth)acrylamide is N-methylolmethacrylamide.
The tanning agent having N-methylolmethacrylamide offers equivalent performance to the tanning agent having N-methylolacrylamide while having a lower toxicity and a lower environmental impact.
The quantity of N-methyol(meth)acrylamide is between 0.01 and 12 mol%, preferably between 0.1 and 6 mol%, more preferably between 0.2 and 3 mol%.

Advantageously, the other anionic hydrophilic monomer(s) being able to be used in the scope of the invention can be chosen from a large group. These monomers can have a vinyl function, in particular, acrylic, maleic, fumaric, malonic or allylic. They can also contain a carboxylate, phosphonate, phosphate, sulfonate, sulphate group, or another anionic filler group. Advantageously, the anionic hydrophilic monomer is one or more monomers chosen from the group consisting of: acrylic acid, methacrylic acid, dimethylacrylic acid, crotonic acid, maleic acid, fumaric acid, 3-acrylamido 3-methylbutanoic acid, strong acid-type monomers having, for example, a sulphonic acid- or phosphonic acid-type function, such as vinylsulphonic acid, vinylphosphonic acid, allylsulphonic acid, methallylsulphonic acid, 2-methylidenepropane-1,3-disulphonic acid, 2-sulfoethylmethacrylate, sulfopropylmethacrylate, sulfopropylacrylate, allylphosphonic acid, ethylene glycol methacrylate phosphate, sulphonic styrene acid, 2-acrylamido-2-methylpropane sulphonic acid (ATBS), 2-acrylamido-2-methylpropane disulphonic acid, 3-allyloxy-2-hydroxypropane sulphonic acid, diethylallylphosphonate, carboxyethyl acrylate; water-soluble salts of these monomers, advantageously like their alkaline metal, alkaline earth metals, or ammonium salts. Preferably, the anionic hydrophilic monomer is chosen from among acrylic acid and methacrylic acid.

The polymer (tanning agent) advantageously comprises between 50 and 99.99 mol% of anionic hydrophilic monomer(s), preferably between 75 and 99.9 mol%, and more preferably between 97 and 99.8 mol%.

In an embodiment of the invention, the anionic hydrophilic monomer(s) can be partially or totally salified.

By salified, this means the substitution of a proton of at least one acid function of the - $R^a$(=O)-OH type (with $R^a$ representing P, S or C) of the anionic hydrophilic monomer by a metal cation or organic cation to form a salt of the -$R^a$(=O)-O$X^+$ type ($X^+$ being a metal cation or an organic cation). In other words, the non-salified form corresponds to the acid form of the monomer, for example $R^b$-C(=O)-OH in the case of the carboxylic acid function, while the salified form of the monomer corresponds to the $R^b$-C(=O)-$O^-$ $X^+$ form, $X^+$ corresponding to a metal cation or an organic cation. The salification of the acid functions can be partial or total.

The metal cation is advantageously an alkaline metal salt (Li, Na, K, ...) or an alkaline earth metal (Ca, Mg, ...), and the organic cation is advantageously ammonium ion or a tertiary ammonium. The preferred salts are sodium salt.

The salification can be done, partially or totally, before, during or after polymerisation.

Advantageously, 30 to 100 mol% of the total anionic hydrophilic monomers comprised in the tanning agent are in salified form, preferably 50 to 100 mol%.

Further to N-methylol(meth)acrylamide and the anionic hydrophilic monomer, the tanning agent can further comprise at least one other monomer, chosen from among: non-ionic hydrophilic monomers other than N-methylol(meth)acrylamide, cationic hydrophilic monomers, zwitterionic hydrophilic monomers, hydrophobic monomers, and their mixtures.

Advantageously, the non-ionic hydrophilic monomer(s) other than N-methylol(meth)acrylamide being able to be used in the scope of the invention are chosen from the group consisting of: acrylamide, methacrylamide, N-alkylacrylamides, N-alkylmethacrylamides, N,N-dialkyl acrylamides (for example, N,N-dimethylacrylamide or N,N-diethylacrylamide), N,N-dialkylmethacrylamides, acrylic acid alkoxyl esters, methacrylic acid alkoxyl esters, N-vinylpyrrolidone, N-methylol(meth)acrylamide, N-vinyl caprolactame, acryloyl chloride, N-vinylformamide (NVF), N-vinyl acetamide, N-vinyl imidazole, N-vinyl succinimide, acryloyl morpholine (ACMO), glycidyl methacrylate, vinyl acetate, glyceryl methacrylate, diacetone acrylamide, methacrylic anyhydride, acrylonitrile, maleic anhydride, itaconic anhydride, hydroxyalkyl (meth) acrylate, thioalkyl (meth)acrylate, isoprenol and its alkoxyl derivatives, hydroxyethyl(meth)acrylates and their alkoxyl derivatives, hydroxypropyl(meth)acrylate and its alkoxyl derivatives, and their mixtures. Among these non-ionic monomers, the alkyl groups are advantageously $C_1$-$C_5$, and more advantageously $C_1$-$C_3$.

The tanning agent advantageously comprises between 0.1 and 49.99 mol% of non-ionic hydrophilic monomer(s) other than N-methylol(meth)acrylamide.

The cationic hydrophilic monomer(s) being able to be used in the scope of the invention are chosen, in particular, from among vinyl-type monomers, in particular, acrylic, allylic or maleic acrylamide having a protonatable amine or ammonium, advantageously quaternary ammonium function. Advantageously, the cationic hydrophilic monomer(s) used in the scope of the invention are chosen from the group consisting of: diallyldialkyl ammonium salts like dimethyldiallylammonium chloride (DADMAC); acidified or quaternised dialkylaminoalkyl(meth)acrylamide salts, like for example, (3-methacrylamidopropyl)trimethylammonium chloride (MAPTAC), (3-acrylamidopropyl)trimethylammonium chloride (APTAC); acidified or quaternised dialkyl aminoalkyl acrylate salts like quaternised or salified dimethylaminoethyl acrylate (ADAME); acidified or quaternised dialkyl aminoalkyl salts like quaternised or salified dimethylaminoethyl methacrylate (MADAME); acidified or quaternised N,N-dimethylallylamine salts; acidified or quaternised diallylmethylamine salts; acidified or quaternised diallylamine salts; vinylamine obtained by hydrolysis (basic or acid) of a -N($R^2$)-CO-$R^1$ amide group with $R^1$ and $R^2$ being, independently, a hydrogen atom or an alkyl chain of 1 to 6 carbons, for example, polyvinylamine coming from the hydrolysis of a vinylformamide (co)polymer; vinylamine coming from the Hofmann degradation on a (meth)acrylamide or acrylonitrile (co)polymer; and their mixtures. Advantageously, the alkyl groups are $C_1$-$C_5$, preferably $C_1$-$C_3$ and can be linear or branched-chain chains.

The tanning agent advantageously comprises less than 50 mol% of cationic hydrophilic monomer(s), preferably less than 40 mol%, more preferably less than 30 mol%, more preferably less than 20 mol%, more preferably less than 10

mol% and more preferably less than 5 mol%.

A person skilled in the art will know how to prepare the quaternised monomers, for example, by means of an R-$X^1$-type quaternisation agent, R being an alkyl group and $X^1$ being a halogen or a sulphate.

"Quaternisation agent" means a molecule being able to alkylate a tertiary amine.

The quaternisation agent can be chosen, in particular, from among dialkyl sulphates comprising 1 to 6 carbon atoms, preferably 1 to 4 carbon atoms, or alkyl halides comprising 1 to 6 carbon atoms, preferably 1 to 4 carbon atoms. Preferably, the quaternisation agent is chosen from among methyl chloride, benzyl chloride, dimethyl sulphate, or diethyl sulphate.

Furthermore, the present invention also covers DADMAC-, APTAC- and MAPTAC-type monomers, the counter-ion of which is a sulphate, a fluoride, a bromide, or an iodide instead of chloride.

In a preferred embodiment, the tanning agent has no cationic hydrophilic monomers.

When the tanning agent comprises hydrophobic monomers, they are present in a quantity such that the polymer remains soluble in water.

In a preferred embodiment, the tanning agent has no hydrophobic monomers.

The quantities of the different monomers will be adjusted by a person skilled in the art in order not to exceed 100 mol% during the preparation of the tanning agent.

In an embodiment, the tanning agent can be partially or totally post-hydrolysed.

Post-hydrolysis is a hydrolysis reaction of the polymer after it has been formed by polymerisation of the monomers. This step consists of a reaction of hydrolysable functional groups of advantageously non-ionic monomers, more advantageously amide or ester functions, with a hydrolysis agent. This hydrolysis agent can, for example, be an enzyme, an ion-exchange resin, or a Brønsted acid metal (for example, a hydrohalogenic acid) or a Brønsted base (for example, an alkali hydroxide or an alkaline-earth hydroxide). Preferably, the hydrolysis agent is a Brønsted base. During this step of post-hydrolysing the polymer comprising amide or ester functions, the number of carboxylic acid functions increases. Indeed, the reaction between the base and the amide or ester functions present in the polymer produces carboxylate groups.

**Structure of the tanning agent**

According to the invention, the tanning agent consists of a polymer which can have a linear, branched, ramified, star-shaped or comb-shaped, advantageously linear structure. This structure can be obtained, according to the general knowledge of a person skilled in the art, for example by selecting the initiator, the transfer agent, the polymerisation technique such as Reversible Addition Fragmentation chain Transfer Polymerisation (RAFT), Nitroxide Mediated Polymerisation (NMP) or Atom Transfer Radical Polymerisation (ATRP), the incorporation of structural monomers, or the concentration.

The tanning agent can be a random polymer, a block polymer, or a gradient polymer.

"Random polymer" means a polymer in which the organisation of the monomers is random. A random polymer is obtained by putting all the monomers composing the polymer at the start of the polymerisation.

"Block polymer" means di-blocks, tri-blocks, or multi-blocks, grafted sequenced polymers, branched-chain sequenced polymers (also known as star-shaped linear polymers).

Polymers having a block structure are polymers composed of at least two different monomer blocks. Di-block polymers have two distinct blocks; tri-block polymers have three of them, etc. They are advantageously obtained by successively polymerising different species of monomers.

In an embodiment, the tanning agent has an X-Y-type structure, when it is composed of two different monomers. In other words, the first fraction only comprises, as a monomer, monomers X. They are polymerized initially and when all the monomers X have reacted, then the second fraction comprising the monomers Y is added.

In an embodiment, the tanning agent has an X-Y-Z-type structure, when it is composed of three different monomers. In other words, the first fraction only comprises, monomers X. They are polymerised initially and when all the monomers X have reacted, then the second fraction comprising the monomers Y is added. When the monomers Y have reacted, then the third fraction comprising the monomers Z is added.

This polymerisation system can be extended to obtain so-called multi-block polymers having a structure $X_1$-$Y_1$-...-$X_{n-1}$-$Y_{n-1}$-$X_n$-$Y_n$, n being an integer greater than or equal to 2 representing the number of blocks.

"Gradient polymer" means a polymer, the monomer composition of which varies in a controlled manner all along the polymer chain.

Polymers having a gradient structure are polymers composed of at least two monomers in which the composition change of the monomers is gradual, unlike block polymers, which have a sudden composition change, and random polymers, which do not have a continuous composition change. In the gradient polymer, due to the gradual change of composition over the length of the polymer chain, less intra-chain and inter-chain repulsion is observed.

The gradient can be formed by a spontaneous or forced gradient. Spontaneous gradient polymerisation is due to

a difference of monomer reactivity. Forced gradient polymerisation involves making the monomer introduced composition vary all throughout the polymerisation time.

A forced gradient polymer preparation method comprises (1) introducing a first fraction of monomers in a reactor, (2) adding at least one additional fraction of monomers and advantageously different from the first and (3) polymerising the monomers introduced in the reactor. The polymerisation of monomers is initiated from the introduction of the first fraction.

Adding the additional fraction of monomers can be done at the same time as introducing the first fraction of monomers in the reactor (introducing fractions can therefore start and end at the same time). Alternatively, the start of the first monomer provision (first fraction) in the reactor can precede the start of adding a second monomer fraction. Alternatively, a first and a second fraction can be introduced simultaneously, but the duration of adding the second fraction can be greater than the duration of introducing the first fraction in the reactor. This embodiment is also applicable to the methods implementing at least 3 fractions of monomers.

The branching agent is advantageously chosen from:

- structural agents, which can be selected from the group comprising unsaturated polyethylene compounds (having at least two unsaturated functions), except for compounds of the diallyldialkyl ammonium type), like for example, vinyl functions, in particular allyl or acrylic, and for example, methylene bis acrylamide (MBA), triallylamine, or tetraallylammonium chloride or 1,2 dihydroxyethylene bis-(N-acrylamide) can be mentioned,
- compounds having at least two epoxy functions,
- compounds having at least one unsaturated function and one epoxy function,
- macroinitiators such as polyperoxides, polyazoics and transfer polyagents, such as polymercaptan polymers, and polyols,
- functionalised polysaccharides,
- water-soluble metal complexes composed of:
    - * of a metal of a valence equal to or greater than 3 such as, by way of example and in a nonlimiting manner, aluminium, boron, zirconium, or also titanium, and
    - * of a ligand carrying a hydroxyl function.

When the tanning agent comprises a branching agent, it remains soluble in water. A person skilled in the art knows how to adjust the quantity of branching agent and, possibly, the quantity of transfer agent needed to obtain this result.

In a preferred embodiment, the tanning agent has no branching agent.

In a preferred embodiment, the tanning agent comprises a transfer agent.

The transfer agent is advantageously chosen from among methanol, isopropylic alcohol, sodium hypophosphite, calcium hypophosphite, magnesium hypophosphite, potassium hypophosphite, ammonium hypophosphite, formic acid, sodium formate, calcium formate, magnesium formate, potassium formate, ammonium formate, 2-mercaptoethanol, 3-mercaptopropanol, glycol dithiopropylene, thioglycerol, thioglycolic acid, thiohydracrylic acid, thiolactic acid, thiomalic acid, cysteine, aminoethanethiol, thioglycolates, allyl phosphites, allyl mercaptans, like n-dodecyl mercaptan, sodium methallylsulfonate, calcium methallylsulfonate, magnesium methallysulfonate, potassium methallylsulfonate, ammonium methallylsulfonate, alkyl phosphites like tri alkyl ($C_{12}$-$C_{15}$) phosphites, di-oleyl-hydrogenophosphites, dibutyl phosphite, dialkyldithiophosphates like dioctyl phosphonate, tertiary nonylmercaptan, 2-ethylhexyl thioglycolate, n-octyl mercaptan, n-dodecyl mercaptan, tertio-dodecyl mercaptan, iso-octylthioglycolate, 2-ethylhexyl thioglycolate, 2-ethylhexyl mercaptoacetate, polythiols, and their mixtures. Preferably, this is sodium hypophosphite or sodium formate.

The quantity of transfer agent in the tanning agent is advantageously between 500 and 500,000 ppm, by weight, with respect to the total weight of the monomers of the tanning agent, preferably between 1,000 and 400,000 ppm by weight, more preferably between 10,000 and 300,000 ppm, even more preferably between 50,000 and 250,000 ppm by weight.

The tanning agent advantageously has a weight-average molecular weight of between 500 and 100,000 g/mol, preferably between 1,000 and 30,000 g/mol, more preferably between 2,000 and 15,000 g/mol.

The molecular weight can be determined by steric exclusion chromatography using a measurement standard. As an example, the following apparatus can be used:

- Agilent® 1260 Infinity system:
    - * Chromatographic columns:
        - * PL Aquagel guard column
        - * PL Aquagel OH 20

* PL Aquagel OH 40
* Solvent:

    * NaCl, 100 mM in water
    * $NaH_2PO_4$, 10 mM in water
    * $NaN_3$, 0.02% by weight in water
    * Flow rate: 0.8 mL/min
    * Column temperature: 35°C
    * Refractometer temperature: 35°C
    * Injection volume: 100 μL
    * Analysis time: 45 minutes.

The calibration is carried out using weight-average molecular weight standards of polyacrylic acids (source "American polymer standards") having the following features:

- Standards 1: Molecular weight = 900 g/mol
- Standards 2: Molecular weight = 1,250 g/mol
- Standards 3: Molecular weight = 2,925 g/mol
- Standards 4: Molecular weight = 5,800 g/mol
- Standards 5: Molecular weight = 7,500 g/mol
- Standards 6: Molecular weight = 28,000 g/mol
- Standards 7: Molecular weight = 47,500 g/mol
- Standards 8: Molecular weight = 193,800 g/mol

In an embodiment, the tanning agent consists of a polymer consisting of:

- 0.01 to 12 mol% of N-methylol(meth)acrylamide, preferably 0.1 to 6 mol%, more preferably 0.2 to 3 mol%; and
- 88 to 99.99 mol% of (meth)acrylic acid, preferably 94 to 99.9 mol%, more preferably 97 to 99.8 mol%.

In an embodiment, the tanning agent consists of a polymer consisting of:

- 0.01 to 12 mol% of N-methylol(meth)acrylamide, preferably 0.1 to 6 mol%, more preferably 0.2 to 3 mol%;
- between 0.1 and 99.89 mol% of methacrylic acid, preferably 0.1 to 99.8 mol%, more preferably 97 to 99.7 mol%;
- between 0.1 and 99.89 mol% of acrylic acid, preferably 0.1 to 99.8 mol%, more preferably 0.1 to 99.7 mol%,

the sum of the quantities of methacrylic acid and of acrylic acid being at least equal to 50 mol%.

In an embodiment, the tanning agent consists of a polymer consisting of:

- 0.01 to 12 mol% of N-methylol(meth)acrylamide, preferably 0.1 to 6 mol%, more preferably 0.2 to 3 mol%;
- 0.1 to 99.89 mol% of methacrylic acid, preferably 0.1 to 99.8 mol%, more preferably 0.1 to 99.7 mol%;
- 0.1 to 99.89 mol% of acrylic acid, preferably 0.1 to 99.8 mol%, more preferably 0.1 to 99.7 mol%;

the sum of the quantities of methacrylic acid and acrylic acid being at least equal to 50 mol%.

**Method for preparing a tanning agent**

The invention also relates to a method for preparing a tanning agent consisting of a polymer of at least:

- 0.01 to 12 mol% of N-methylol(meth)acrylamide monomer; and
- 50 to 99.99 mol% of at least one anionic hydrophilic monomer,

this method comprising at least the following successive steps:

i) mixing the monomers with at least one polymerisation initiator in a polar solvent;
ii) radical polymerisation of the monomers to obtain the tanning agent.

By radical polymerization, polymerization by free radicals is included, by means of UV, azoic, redox, or thermal initiators, as well as controlled radical polymerization (CRP) techniques or matrix polymerization techniques.

Controlled radical polymerisation techniques include, but are not limited to, techniques such as Iodine Transfer polymerisation (ITP), Nitroxide Mediated Polymerisation (NMP), Atom Transfer Radical Polymerisation (ATRP), Reversible Addition Fragmentation chain Transfer (RAFT) Polymerisation, which includes MADIX (MAcromolecular Design by Interchange of Xanthates) technology, various variations of Organometallic Mediated Radical Polymerisation (OMRP), and OrganoHeteroatom-mediated Radical Polymerisation (OHRP).

In a preferred embodiment, the polymerisation is done by reversible addition-fragmentation chain transfer polymerisation (RAFT).

RAFT is a reversible deactivation radical polymerisation (RDRP) technique, combine both the facility to implement conventional radical polymerisation and the living character of ionic polymerisation.

It is based on a reversible activation-deactivation balance between a dormant species and an active species (growing macro-radical). This activation-deactivation process enables the chains to grow at the same speed, and this, until the total consumption of the monomer, making controlling the molecular weights of the polymers possible and obtaining the narrow distributions of molecular weights. This will also make it possible to minimise the heterogeneity of the composition. The reversible deactivation of the growing chains lies at the origin of minimising irreversible end reactions. The large majority of polymer chains remains in dormant form and can therefore be reactivated. It is thus possible to functionalise the chain ends in view of priming other polymerisation modes or to make chain extensions. This is the key for accessing high molecular weights, controlled compositions, and architectures.

Controlled radical polymerisation therefore has the following distinctive aspects:

1. the number of polymer chains is fixed for the entire duration of the reaction,
2. the polymer chains all grow at the same speed, which is conveyed by:

    * a linear increase of the molecular weights,
    * a narrowed molecular weight distribution,

3. the mean molecular weight is controlled by the monomer/precursor molar ratio.

The controlled character is all the more marked that the reactivation speed of the radical chains is high in front of the growth speed of the chains (propagation). However, in certain cases, the reactivation speed of the radical chains is greater than or equal to the propagation speed. In these cases, conditions 1 and 2 are not observed and, consequently, controlling the molecular weights is not possible.

Reversible addition-fragmentation chain transfer polymerisation requires the use of a control agent.

In the scope of the invention, the control agent is water-soluble and of formula (I):

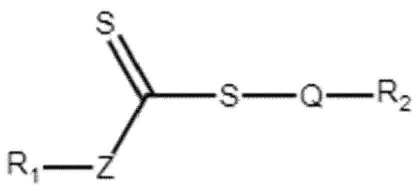

(I)

wherein

- Z represents an oxygen atom (O), a sulphur atom (S) or an amine ($NR_3$);
- $R_1$ and $R_2$ and $R_3$, identical or different, represent:

    * an optionally substituted alkyl, acyl, alkenyl or alkynyl group (i), or
    * a carbon cycle (ii), saturated or not, optionally substituted or aromatic, or
    * a heterocycle (iii), saturated or not, optionally substituted or aromatic,

  these groups and cycles (i), (ii) and (iii) being able to be substituted by substituted aromatic groups or by alkoxycarbonyl or aryloxycarbonyl (-COOR), carboxy (-COOH), acyloxy ($-O_2CR$), carbamoyl ($-CON(R)_2$), cyano (-CN), alkylcarbonyl, alkylarylcarbonyl, arylcarbonyl, arylalkylcarbonyl, phtalimido, maleimido, succinimido, amidino, guanidimo, hydroxy (-OH), amino ($-N(R)_2$), halogen, allyl, epoxy, alkoxy (-OR), S-alkyl, S-aryl groups, groups having a hydrophilic or ionic character, such as carboxylic acid alkaline salts, sulfonic acid alkaline salts, alkylene polyoxide chains (POE, POP), cationic substitutes (quaternary ammonium salts);
- R represents a $C_1$-$C_{20}$ alkyl or aryl group;

- $R_3$ can further represent a hydrogen atom;
- Q is a linear or structured chain comprising n identical or different monomers comprising at least one ethylenic function;
- n is an integer of between 0 and 500, advantageously between 1 and 500, more advantageously between 1 and 100. When n is equal to 0, Q is a simple bond between the sulphur atom and the $R_2$ group.

The monomer(s) used to form Q are advantageously chosen from the same hydrophilic monomers as those described to form the tanning agent.
In the $N(R)_2$ functions, the two R groups can be identical or different from one another.
According to a preferred embodiment, the water-soluble control agent of formula (I), is a dithiocarbonate or xanthate derivative, wherein Z represents an oxygen atom (O).
According to a preferred embodiment, the water-soluble control agent is of formula (I), wherein:

- Z represents an oxygen atom (O) ;
- Q is a linear or structured chain obtained from 0 to 100 monomers comprising at least one non-ionic hydrophilic monomer and/or at least one anionic hydrophilic monomer and/or at least one cationic hydrophilic monomer.

According to a preferred embodiment, the water-soluble control agent is of formula (I), wherein:

- Z represents an oxygen atom (O);
- Q is a linear or structured chain obtained from 0 to 100 monomers comprising at least one non-ionic hydrophilic monomer and/or at least one anionic hydrophilic monomer and/or at least one monomer comprising an LCST group.

In another preferred embodiment, the water-soluble control agent is of formula (II):

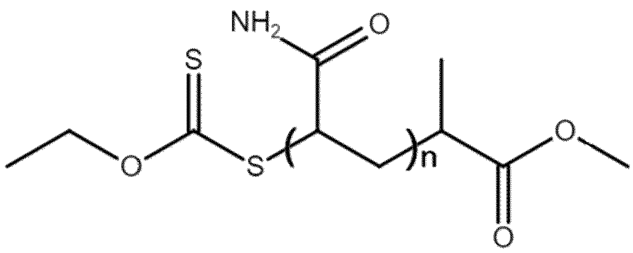

(II)

wherein n is an integer of between 0 and 100, preferably between 1 and 50.
In another preferred embodiment, the control agent is of formula (IV), wherein Z represents a sulphur atom (S).
In another preferred embodiment, the control agent is of formula (III):

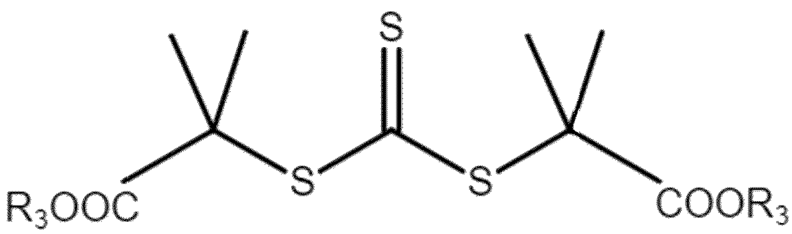

(III)

wherein: the $R_3$ are identical or different, independently represent H or $CH_3$ or a salt, the salt being advantageously chosen from among salts of alkaline metals (Li, Na, K, ...), alkaline earth metals (Ca, Mg, ...) or ammonium ions (for example, ammonium ion or a tertiary ammonium), preferably a sodium salt.
In another preferred embodiment, the control agent is a trithiocarbonate of following formula (IV):

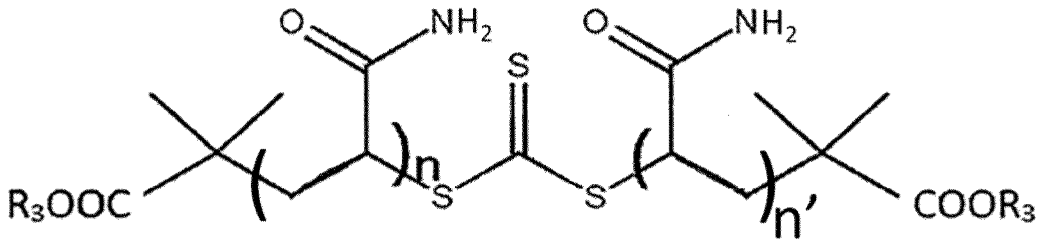

(IV)

wherein Z=S, Q is a chain of an acrylamide monomer and:

- the $R_3$ are identical or different, independently represent an H or a $CH_3$ or a monovalent or divalent cation, advantageously chosen from among cations of alkaline metals (Li, Na, K, ...), alkaline earth metals (Ca, Mg, ...) or ammonium ion (for example, ammonium ion or a tertiary ammonium), preferably this is sodium;
- n and n' are integers independent of one another, of between 1 and 100, preferably between 1 and 50.

In another preferred embodiment, the control agent is of following formula (V):

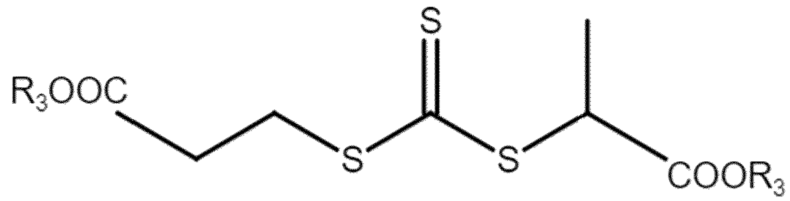

(V)

wherein: the $R_3$ are identical or different, independently represent H, $CH_3$ or a salt, the salt being advantageously chosen from among salts of alkaline metals (Li, Na, K, ...), alkaline earth metals (Ca, Mg, ...) or ammonium ions (for example, ammonium ion or a tertiary ammonium). Preferably, this is a sodium salt.

In another preferred embodiment, the control agent is of formula (VI):

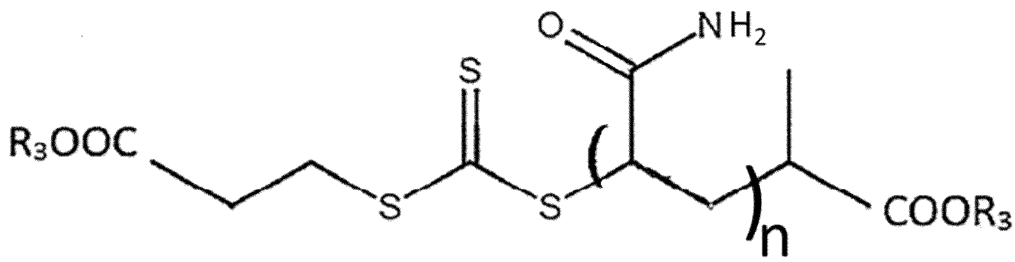

(VI)

wherein Z=S, Q is a chain of an acrylamide monomer, and:

- the $R_4$ are identical or different, independently represent an H, a $CH_3$ or a monovalent or divalent cation, advantageously chosen from among cations of alkaline metals (Li, Na, K, ...), alkaline earth metals (Ca, Mg, ...) or ammonium ion (for example, ammonium ion or a tertiary ammonium), preferably this is sodium; and
- n is an integer, of between 4 and 100, preferably between 4 and 50.

The polymerisation initiators used are advantageously chosen from among the compounds which are separated into radicals under polymerisation conditions, for example: organic peroxides, hydroperoxides, hydrogen peroxide, persulfates, azoic compounds, and redox salts. Using initiators which are soluble in water is preferred. In certain cases, it is advantageous to use mixtures of various polymerisation initiators, for example, mixtures of redox salts and of azoic compounds.

In a preferred embodiment, the polymerisation initiator is a pair of redox salts.

The reducing agent of the pair of redox salts is advantageously chosen from among the sulphites of salts of alkaline metals (Li, Na, K, ...), alkaline earth metals (Ca, Mg, ...) or ammonium (for example, the ammonium ion or a tertiary ammonium, sulphur dioxide, the metabisulphites of salts of alkaline metals (Li, Na, K, ...), alkaline earth metals (Ca, Mg, ...) or ammonium (for example, the ammonium ion or a tertiary ammonium).

The oxidising agent of the pair of redox salts is advantageously chosen from among peroxides such as tert-butyl hydroperoxide, persulfates of alkaline metals (Li, Na, K, ...), alkaline earth metals (Ca, Mg, ...) or ammonium (for example, ammonium ion or a tertiary ammonium, hydrogen peroxide).

In an embodiment, the initiation of the polymerisation occurs by Fenton reaction. The Fenton reaction is an oxidation reaction which consists in initiating decomposition reactions of hydrogen peroxide ($H_2O_2$) by metal salts in order to generate radical species, preferably hydroxyl radicals HO•.

Advantageously, the quantity of initiator is between 500 and 500,000 ppm by weight with respect to the total weight of the monomers of the tanning agent, preferably between 1000 and 400,000 ppm by weight, more preferably between 10,000 and 300,000 ppm by weight, and even more preferably between 50,000 and 200,000 ppm.

The initiator(s) can be added all at once, in several stages or continuously, i. e. by progressive pouring. Preferably the initiator(s) are added continuously.

In the case of redox salts, the reducing agent and the oxidising agent can be added continuously during polymerisation, i.e. by progressive pouring, at the same time or one after the other. Advantageously, at least the reducing agent or the oxidising agent is added with the monomers, and the other compound of the redox pair is added continuously, i.e. by progressive pouring all throughout polymerisation.

The monomers are polymerised in a polar solvent, advantageously chosen from among water, isopropanol, terbutanol, ethanol, acetone, dimethyl sulfoxide, tetrahydrofuran, dimethylformamide and their mixtures. Advantageously, this is water.

Polymerization can be done in solution; in gel; by precipitation; in emulsion (aqueous or opposite); in suspension; or water in water, preferably it is done in solution.

The quantity of active ingredient during polymerisation is advantageously between 15 and 60% by weight with respect to the total weight of the reaction medium, preferably between 25 and 55% by weight, more preferably between 35 and 50% by weight.

"Active ingredient" means all polymerised compounds. These are therefore monomers, initiators, and optionally branching agents and transfer agents. The active ingredient does not include the solvent(s). It does not include surfactants and oil used in emulsion polymerisation or any salts (precipitation polymerisation, ...).

"Reaction medium" means all the compounds used during polymerisation, i.e. the active ingredient as well as the solvent(s). The reaction medium includes the surfactants and oil used in emulsion polymerisation or optional salts (precipitation polymerisation, ...).

**In** a preferred embodiment, the radical polymerisation of the monomers is carried out in the presence of at least one transfer agent,

15 to 35% by weight of the at least one transfer agent, with respect to the total weight of transfer agent, being added during step i), and

65 to 85% by weight of the at least one transfer agent, with respect to the total weight of transfer agent, being poured progressively all throughout step ii).

The method of polymerisation according to the invention can be done in batch, in semi-batch or continuously, advantageously it is carried out in batch. Preferably, it is carried out by batch solution polymerisation.

During polymerisation, it is possible to pour progressively the various compounds constituting the polymer constituting the tanning agent. For example, it is possible to pour progressively N-methylol(meth)acrylamide, and/or the anionic monomer(s), or any other monomers that can constitute the tanning agent. It is also possible to pour progressively the branching agent and/or the transfer agent when at least one of the two is present, or to pour progressively the initiator.

**In** a preferred embodiment, N-methylol(meth)acrylamide is poured progressively during the polymerisation step.

In a preferred embodiment, N-methylol(meth)acrylamide and at least one anionic hydrophilic monomer are poured progressively during polymerisation.

In a preferred embodiment, all the monomers constituting the tanning agent are poured progressively during polymerisation. The temperature at which the polymerisation is initiated is advantageously between more than 0°C and 50°C.

In a preferred embodiment, all the constituents of the tanning agent are poured progressively during polymerisation in the polar solvent.

Once the polymerisation is initiated, the temperature is controlled to advantageously be between 1°C and less than 150°C, preferably between 20 and 100°C, more preferably between 20 and 90°C.

The pressure during polymerisation can be controlled. It is advantageously between 800mbar and 10bars,

preferably between 900 mbar and 5 bars. More preferably, polymerisation is carried out at atmospheric pressure.

Controlling the pressure can be implemented by a person skilled in the art, as this remains within the scope of their general knowledge.

The polymerization advantageously lasts between 30 minutes and 480 minutes, preferably between 30 minutes and 300 minutes, more preferably between 75 minutes and 200 minutes.

In an embodiment, the method of the invention comprises, following polymerisation, a step iii) of removing the residual monomers. The removal of the residual monomers can be done, for example, by adding a radical precursor.

In an embodiment, the polymerisation of the monomers constituting the tanning agent is done in the presence of cyclodextrin, preferably $\alpha$-cyclodextrin.

The molar ratio between $\alpha$-cyclodextrin and N-methylolacrylamide is advantageously between 10:1 and 1:10, preferably 5:1 and 1:5, more preferably 2:1 and 1:2.

The invention also relates to a method for tanning leather comprising the contacting of a skin with at least one tanning agent according to the invention.

The invention also relates to leather obtained according to the tanning method of the invention.

Finally, the invention relates to a method for manufacturing items for leather goods, gloves, shoemaking, furniture, or saddlery with the leather obtained according to the tanning method of the invention.

The examples below illustrate the invention without, however, limiting it.

## Examples

### * Synthesis

P11 polymer

Four solutions are poured progressively simultaneously into a 2L reactor surmounted by a refrigerant, comprising a composition C1 of 220.4 g of water:

- 208.6 g of a solution S1 of methacrylic acid in 120 minutes;
- 32.6 g of a solution S2 of N-methylolacrylamide (48% by weight in water) in 120 minutes;
- 89.7 g of sodium persulfate solution S3 (15% by weight in water) in 130 minutes;
- 224.1 g of a solution S4 of sodium hypophosphite (25% by weight in water) in 130 minutes; the temperature is controlled between 82 and 87°C, enabling polymerisation in solution of the monomers.

Once the progressive pouring is completed, 294.5 g of water, then 194 g of sodium hydroxide (50% by weight in water), are added in order to convert the methacrylic acid into methacrylate, while controlling the temperature of the medium, such that it does not exceed 75°C.

A solution comprising the P11 polymer is thus obtained.

The P11 polymer synthesis protocol is repeated, by adjusting the monomer compositions and the quantity of sodium hypophosphite, in order to obtain the P1-P16 polymers, the compositions of which are detailed in table 1.

The P11 polymer synthesis protocol is repeated by adjusting the monomer compositions, the quantity of sodium hypophosphite and by adding different amounts of $\alpha$-cyclodextrin, in order to obtain the P17 and P18 polymers, the compositions of which are detailed in table 2.

The P11 polymer synthesis protocol is repeated with the difference that the sodium hypophosphite solution S4 comprises 168 g (25% by weight in water) of sodium hypophosphite and the composition C1 comprises 220.4 g of water and 56.1 g of sodium hypophosphite, in order to obtain the P19 polymer.

In the examples, hypophosphite is used as the transfer agent. Its quantity is expressed in ppm with respect to the weight of the monomers.

Table 1: Composition of P1 to P16 and P19 polymers

| Polymer | Composition (%mol) | | Sodium hypophosphite (ppm) | Molecular weight (g/mol) |
|---|---|---|---|---|
| | MAA | NMA | | |
| P1 (Counter-example) | 100 | - | 124,918 | 12,000 |
| P2 (Invention) | 99.5 | 0.5 | 249,835 | 5,000 |
| P3 (Invention) | 99.5 | 0,5 | 166,558 | 9,000 |
| P4 (Invention) | 99.5 | 0.5 | 124,918 | 12,000 |

(continued)

| Polymer | Composition (%mol) | | Sodium hypophosphite (ppm) | Molecular weight (g/mol) |
|---|---|---|---|---|
| | MAA | NMA | | |
| P5 (Invention) | 98.5 | 1.5 | 249,835 | 5,000 |
| P6 (Invention) | 98.5 | 1.5 | 166,558 | 9,000 |
| P7 (Invention) | 98.5 | 1.5 | 124,918 | 12,000 |
| P8 (Invention) | 97 | 3 | 249,835 | 5,000 |
| P9 (Invention) | 97 | 3 | 166,558 | 9,000 |
| P10 (Invention) | 97 | 3 | 124,918 | 12,000 |
| P11 (Invention) | 94 | 6 | 249,835 | 5,000 |
| P12 (Invention) | 94 | 6 | 166,558 | 9,000 |
| P13 (Invention) | 94 | 6 | 124,918 | 12,000 |
| P14 (Invention) | 90 | 10 | 270,000 | 3,600 |
| P15 (Invention) | 90 | 10 | 166,558 | 9,000 |
| P16 (Counter-example) | 85 | 15 | 300,000 | 2,200 |
| P19 (Invention) | 94 | 6 | 249,835 | 5,000 |

Table 2: Composition of P17 and P18 polymers

| Polymer | Composition (%mol) | | | Sodium hypophosphite (ppm) | Molecular weight (g/mol) |
|---|---|---|---|---|---|
| | MAA | NMA | $\alpha$-cyclodextrine | | |
| P17 (Invention) | 99 | 0.5 | 0.5 | - | 9,000 |
| P18 (Invention) | 99 | 0.25 | 0.25 | 249,835 | 5,000 |

* **Tanning**

**Tanning protocol**

A piece of sheepskin is cut, so as to obtain a 10 g sample, having the following dimensions: 5 cm x 10 cm.
In a beaker, a brine is prepared by mixing:

* 89 g of water;
* 10 g of NaCl;
* 1 g of sulphuric acid (96% by weight in water).

The skin is immersed in the beaker comprising the brine. 10 g of tanning agent (10 g of polymer in solution in the water) are added into the beaker and mixed until completely dissolved. The skin is left for one night without stirring, then dried for 24 hours in the open air.

**Measuring the shrinkage temperature**

The tanned skin sample is immersed in a water bath at 50°C, the temperature of the water bath is progressively increased (1°C/minute) until the skin sample has shrunk by 30% (around 3.5 cm x 7 cm).
The temperature at which the skin sample reaches a shrinkage rate of 30% corresponds to the shrinkage temperature (Tr).
The tanning results with the P1 to P19 polymers are summarised in table 3. As a comparison, the shrinkage temperature of glutaraldehyde tanning is between 65°C and 70°C.

Table 3: Tanning results

| Tanning agent | Tr (°C) |
|---|---|
| P1 (Counter-example) | 60 |
| P2 (Invention) | 68 |
| P3 (Invention) | 67 |
| P4 (Invention) | 69 |
| P5 (Invention) | 67 |
| P6 (Invention) | 68 |
| P7 (Invention) | 68 |
| P8 (Invention) | 69 |
| P9 (Invention) | 68 |
| P10 (Invention) | 65 |
| P11 (Invention) | 66 |
| P12 (Invention) | 66 |
| P13 (Invention) | 64 |
| P14 (Invention) | 65 |
| P15 (Invention) | 65 |
| P16 (Counter-example) | 60 |
| P17 (Invention) | 71 |
| P18 (Invention) | 69 |
| P19 (Invention) | 70 |
| Glutaraldehyde | 65-70 |

The tanning agents of the invention offer a novel alternative to glutaraldehyde tanning, while avoiding toxicity of the latter, and without the risk of formaldehyde release. They make it possible to increase the shrinkage temperature with respect to the P1 and P16 polymers.

## Claims

**1.** A tanning agent consisting of a polymer of at least:

- 0.01 to 12 mol% of N-methylol(meth)acrylamide; and
- 50 to 99.99 mol% of at least one anionic hydrophilic monomer.

**2.** The tanning agent according to claim 1, ***characterised* in that** the anionic hydrophilic monomer is one or more monomers chosen from the group consisting of: acrylic acid, methacrylic acid, dimethylacrylic acid, crotonic acid, maleic acid, fumaric acid, 3-acrylamido 3-methylbutanoic acid, vinylsulfonic acid, vinylphosphonic acid, allylsulfonic acid, methallylsulfonic acid, 2-methylidenepropane-1,3-disulfonic acid, 2-sulfoethylmethacrylate, sulfopropylmethacrylate, sulfopropylacrylate, allylphosphonic acid, ethylene glycol methacrylate phosphate, styrene sulfonic acid, 2-acrylamido-2-methylpropanesulfonic acid, 2-acrylamido-2-methylpropanesulfonic acid, 3-allyloxy-2-hydroxypropanesulfonic acid, diethylallylphosphonate, carboxyethyl acrylate, water-soluble salts of these monomers.

**3.** The tanning agent according to claim 1 or 2, ***characterised* in that** 30 to 100 mol% of the total of the anionic hydrophilic monomers comprised in the tanning agent, are in salified form.

**4.** The tanning agent according to any one of claims 1 to 3, ***characterised* in that** the tanning agent comprises 500 to 500,000 ppm of a transfer agent, by weight, with respect to the total weight of the monomers of the tanning agent.

5. The tanning agent according to any one of claims 1 to 4, ***characterised* in that** the tanning agent has a weight-average molecular weight of between 500 and 100,000 g/mol.

6. A method for preparing a tanning agent consisting of a polymer of at least:

   - 0.01 to 12 mol% N-methylol(meth)acrylamide monomer; and
   - 50 to 99.99 mol% of at least one anionic hydrophilic monomer,

   the method comprising at least the following successive steps:

   i) mixing the monomers with at least one polymerisation initiator in a polar solvent;
   ii) radical polymerisation of the monomers to obtain the tanning agent.

7. The method according to claim 6, ***characterised* in that** the polymerisation is a polymerisation in solution.

8. The method according to claim 6 or 7, ***characterised* in that** all the monomers constituting the tanning agent are poured progressively during polymerisation.

9. The method according to any one of claims 6 to 8, ***characterised* in that** the radical polymerisation of the monomers is carried out in the presence of at least one transfer agent, 15 to 35% by weight of the at least one transfer agent, with respect to the total weight of transfer agent, being added during step i), and
   65 to 85% by weight of the at least one transfer agent, with respect to the total weight of transfer agent, being poured progressively all throughout step ii).

10. A method for tanning leather comprising contacting a skin with at least one tanning agent according to any one of claims 1 to 5.

11. A leather obtained according to the method of claim 10.

12. A method for manufacturing items for leather goods, gloves, shoemaking, furnishing or saddlery with the leather according to claim 11.

## Patentansprüche

1. Ein Gerbstoff, der aus einem Polymer besteht, das mindestens folgende Anteile enthält:

   - 0,01 bis 12 Mol-% N-Methylol(meth)acrylamid; und
   - 50 bis 99,99 Mol-% mindestens eines anionischen hydrophilen Monomers.

2. Gerbstoff nach Anspruch 1, ***dadurch gekennzeichnet,* dass** das anionische hydrophile Monomer ein oder mehrere Monomere ist, das/die aus folgender Gruppe ausgewählt ist/sind: Acrylsäure, Methacrylsäure, Dimethylacrylsäure, Crotonsäure, Maleinsäure, Fumarsäure, 3-Acrylamido-3-methylbutansäure, Vinylsulfonsäure, Vinylphosphonsäure, Allylsulfonsäure, Methallylsulfonsäure, 2-Methylidenpropan-1,3-disulfonsäure, 2-Sulfoethylmethacrylat, Sulfopropylmetha-crylat, Sulfopropylacrylat, Allylphosphonsäure, Ethylenglykolmethacrylat-phosphat, Styrolsulfonsäure, 2-Acrylamido-2-methylpropansulfonsäure, 2-Acrylamido-2-methyl-propansulfonsäure, 3-Allyloxy-2-hydroxypropansulfon-säure, Diethylallylphosphonat, Carboxyethylacrylat, wasserlöslichen Salzen dieser Monomere.

3. Gerbstoff nach Anspruch 1 oder 2, ***dadurch gekennzeichnet,* dass** 30 bis 100 Mol% des gesamten anionischen hydrophilen Monomers, das im Gerbstoff enthalten ist, in Salzform vorliegt.

4. Gerbstoff nach einem der Ansprüche 1 bis 3, ***dadurch gekennzeichnet,* dass** der Gerbstoff 500 bis 500.000 ppm eines Überträgerstoffes, bezogen auf das Gesamtgewicht der Gerbstoffmonomere, enthält.

5. Gerbstoff nach einem der Ansprüche 1 bis 4, ***dadurch gekennzeichnet,* dass** der Gerbstoff ein gewichtsmittleres Molekulargewicht zwischen 500 und 100.000 g/mol aufweist.

6. Verfahren zur Herstellung eines Gerbstoffes, bestehend aus einem Polymer mit mindestens:

- 0,01 bis 12 Mol-% N-Methylol(meth)acrylamid-Monomer; und
- 50 bis 99,99 Mol-% mindestens eines anionischen hydrophilen Monomers,

wobei das Verfahren mindestens folgende aufeinanderfolgende Schritte umfasst:

i) Vermischen des Monomers mit mindestens einem Polymerisationsinitiator in einem polaren Lösungsmittel;
ii) radikalische Polymerisation des Monomers zur Gewinnung des Gerbstoffs.

**7.** Verfahren nach Anspruch 6, ***dadurch gekennzeichnet,*** **dass** es sich bei der Polymerisation um eine Polymerisation in Lösung handelt.

**8.** Verfahren nach Anspruch 6 oder 7, ***dadurch gekennzeichnet,*** **dass** alle Monomere, die den Gerbstoff bilden, während der Polymerisation schrittweise zugegeben werden.

**9.** Verfahren nach einem der Ansprüche 6 bis 8, ***dadurch gekennzeichnet,*** **dass** die radikalische Polymerisation der Monomere in Gegenwart mindestens eines Überträgerstoffes durchgeführt wird,

wobei in Schritt i) 15 bis 35 Gew.-% des mindestens einen Überträgerstoffes, bezogen auf das Gesamtgewicht des Überträgerstoffes, zugegeben werden, und
65 bis 85 Gew.-% des mindestens einen Überträgerstoffes, bezogen auf das Gesamtgewicht des Überträgerstoffes, schrittweise während des gesamten Schritts ii) zugegeben werden.

**10.** Verfahren zur Ledergerbung, bei dem eine Haut mit mindestens einem Gerbstoff nach einem der Ansprüche 1 bis 5 in Kontakt gebracht wird.

**11.** Ein Leder, das nach dem Verfahren nach Anspruch 10 hergestellt wird.

**12.** Verfahren zur Herstellung von Artikeln für Lederwaren, Handschuhe, Schuhe, Einrichtungen oder Sattlerwaren unter Verwendung des Leders nach Anspruch 11.

## Revendications

**1.** Agent de tannage constitué d'un polymère d'au moins :

- 0,01 à 12 mol% de N-méthylol(méth)acrylamide ; et
- 50 à 99,99 mol% d'au moins un monomère hydrophile anionique.

**2.** Agent de tannage selon la revendication 1, ***caractérisé*** **en ce que** le monomère hydrophile anionique est un ou plusieurs monomères choisis dans le groupe constitué de :
l'acide acrylique, l'acide méthacrylique, l'acide diméthylacrylique, l'acide crotonique, l'acide maléique, l'acide fumarique, l'acide 3-acrylamido 3-méthylbutanoïque, l'acide vinylsulfonique, l'acide vinylphosphonique, l'acide allylsulfonique, l'acide méthallylsulfonique, l'acide 2-méthylidenepropane-1,3-disulfonique, le 2-sulfoéthylméthacrylate, le sulfopropylméthacrylate, le sulfopropylacrylate, l'acide allylphosphonique, le phosphate de méthacrylate d'éthylène glycol, l'acide styrène sulfonique, l'acide 2-acrylamido-2-méthylpropane sulfonique, l'acide 2-acrylamido-2-méthylpropane disulfonique, l'acide 3-allyloxy-2-hydroxypropane sulfonique, le diéthylallylphosphonate, l'acrylate de carboxyéthyle, les sels hydrosolubles de ces monomères.

**3.** Agent de tannage selon la revendication 1 ou 2, ***caractérisé*** **en ce que**
30 à 100 mol% du total des monomères hydrophiles anioniques compris dans l'agent tannage, sont sous forme salifiée.

**4.** Agent de tannage selon l'une des revendications 1 à 3, ***caractérisé*** **en ce que** l'agent de tannage comprend 500 à 500 000 ppm d'un agent de transfert, en poids, par rapport au poids total des monomères de l'agent de tannage.

**5.** Agent de tannage selon l'une des revendications 1 à 4, ***caractérisé*** en ce l'agent de tannage a un poids moléculaire moyen en poids compris entre 500 et 100 000 g/mol.

**6.** Procédé de préparation d’un agent de tannage constitué d’un polymère d’au moins :

- 0,01 à 12 mol% de monomère N-méthylol(méth)acrylamide ; et
- 50 à 99,99 mol% d’au moins un monomère hydrophile anionique,

le procédé comprenant au moins les étapes successives :

i) mélange des monomères avec au moins un amorceur de polymérisation dans un solvant polaire ;
ii) polymérisation radicalaire des monomères pour obtenir l’agent de tannage.

**7.** Procédé selon la revendication 6, ***caractérisé* en ce que** la polymérisation est une polymérisation en solution.

**8.** Procédé selon la revendication 6 ou 7, ***caractérisé* en ce que** l’ensemble des monomères constituant l’agent de tannage sont coulés lors de la polymérisation.

**9.** Procédé selon l’une des revendications 6 à 8, ***caractérisé* en ce que** la polymérisation radicalaire des monomères est réalisée en présence d’au moins un agent de transfert,

15 à 35% en poids du au moins un agent de transfert, par rapport au poids total d’agent de transfert, étant ajoutés lors de l’étape i), et
65 à 85% en poids du au moins un agent de transfert, par rapport au poids total d’agent de transfert, étant coulés tout au long de l’étape ii).

**10.** Procédé de tannage de cuir comprenant la mise en contact d’une peau avec au moins un agent de tannage selon l’une des revendications 1 à 5.

**11.** Cuir obtenu selon le procédé de la revendication 10.

**12.** Procédé de fabrication d’articles pour la maroquinerie, la ganterie, la cordonnerie, l’ameublement ou la sellerie avec le cuir selon la revendication 11.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- FR 1415763
- FR 1549717
- DE 1930225
- DE 2755087
- US 3997486 A
- EP 118213 A
- US 5725599 A
- US 4961750 A
- US 4518745 A
- US 201062490 B
- EP 0132630 A
- CN 109354644